Europäisches Patentamt

European Patent Office

Office européen des brevets

(19)

(11) Veröffentlichungsnummer: **0 182 750**
**B1**

(12) # EUROPÄISCHE PATENTSCHRIFT

(45) Veröffentlichungstag der Patentschrift: **19.12.90**

(51) Int. Cl.[5]: **C 08 J 3/24, C 08 J 7/00**

(21) Anmeldenummer: **85810549.7**

(22) Anmeldetag: **18.11.85**

(54) **Vormaterial aus mit Kunststoff beschichteten Fasern und Verfahren zur Herstellung eines solchen Vormaterials.**

(30) Priorität: **23.11.84 CH 5610/84**

(43) Veröffentlichungstag der Anmeldung:
**28.05.86 Patentblatt 86/22**

(45) Bekanntmachung des Hinweises auf die
Patenterteilung:
**19.12.90 Patentblatt 90/51**

(84) Benannte Vertragsstaaten:
**AT CH DE FR GB LI**

(56) Entgegenhaltungen:
**EP-A-0 109 943**
**FR-A-2 229 453**
**GB-A- 908 191**
**GB-A-1 391 028**
**US-A-4 309 452**

(73) Patentinhaber: **CIBA-GEIGY AG**
**Klybeckstrasse 141**
**CH-4002 Basel (CH)**

(72) Erfinder: **Brintrup, Hugo, Dr.**
**Sonnenhofring 12**
**CH-4153 Reinach (CH)**
Erfinder: **Menges, Georg, Dr.**
**Am Beulardstein 19**
**D-510 Aachen (DE)**

EP 0 182 750 B1

Courier Press, Leamington Spa, England.

## Beschreibung

Die Erfindung betrifft ein aus mit Kunststoff beschichteten Fasern bestehendes Vormaterial, insbesondere in Form eines beschichteten Faserstrangs, Faserbündels oder Fasergeleges, sowie ein Verfahren zur Herstellung eines solchen Vormaterials.

Vormateriale dieser Art, sog. "Prepregs", werden u.a. zur Herstellung von Faserverbundwerkstoffen benutzt. Derartige Prepregs sind in der Regel mit unvernetzatem Kunststoff beschichtet. Dies ist erforderlich, da der Kunststoff noch so weit fliessfähig sein muss, dass er bei der Härtung in der Wärme zunächst schmilzt und dann soweit zusammenläuft, dass sich eine geschlossene Harzmatrix bildet, in die die Fasern gleichmässig eingelagert sind.

Nachteilig bei diesen Prepregs ist oft, dass das Harz beim Verpressen herausgedrückt werden kann und es zu Faseransammlungen kommt, die nicht allseitig von Harz umschlossen sind. Diese unerwünschten Effekte sollen nun durch die Erfindung vermieden werden.

Das erfindungsgemässe Vormaterial und das erfindungsgemässe Verfahren zu seiner Herstellung sind in den unabhängigen Ansprüchen 1 und 2 beschrieben. Bevorzugte Ausführungsformen des erfindungsgemässen Verfahrens ergeben sich aus den abhängigen Ansprüchen.

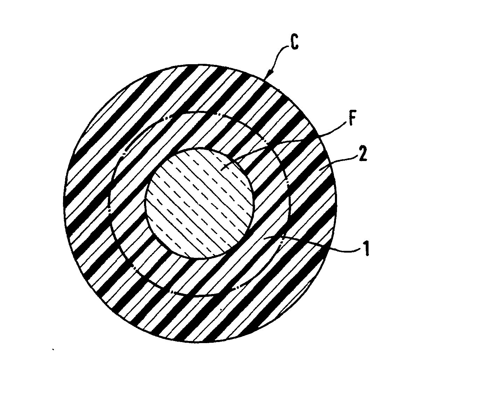

Im folgenden wird die Erfindung anhand der Zeichnung näher erläutert. Die einzige Zeichnungsfigur zeigt einen Querschnitt durch eine beschichtete Faser eines erfindungsgemässen Vormaterials.

Eine Faser F, beispielsweise etwa eine in der GFK-Technik übliche Glasfaser, ist mit einer Beschichtung C aus einem unter Wärme vernetzenden Kunststoff (Harz) versehen. Die Beschichtung C teilt sich, wie aus der Zeichnung hervorgeht, in zwei Teile, nämlich in eine innere Schicht (Kern) une eine Aussenschicht 2. Im Bereich des Kerns 1 ist der Kunststoff num gemäss der Erfindung zumindest teilweise vernetzt, also mehr oder weniger ausgehärtet. Die Aussenschicht 2 dagegen ist im wesentlichen unvernetzt.

Das erfindungsgemässe Vormaterial hat den Vorteil, dass es bei seiner Verarbeitung nicht zu unerwünschten Ausquetschungen des Harzes bzw. zu Agglomeration von Fasern kommen kann.

Die Herstellung von erfindungsgemässem Vormaterial kann auf verschiedene Weise erfolgen. Beispielsweise können die Fasern, Faserbündel, Faserstränge oder Fasergelege zunächst mit einer ersten Harzschicht überzogen werden, die dann ausgehärtet wird und den Beschichtungskern bildet. Die so beschichteten Fasern etc. werden dann mit einer Aussenschicht aus unvernetztem Harz überzogen.

Eine Alternative besteht darin, dass die Fasern mit der definitiv gewünschten Menge unvernetzten Harzes beschichtet werden und diese Beschichtung durch geeignete Massnahmen nur in ihrem inneren Bereich (Kernbereich) vernetzt wird. Dies kann beispielsweise durch Beaufschlagung der Fasern mit elektrischem Strom (elektr. Widerstanderwärmung von innen her) und gleichzeitige Umspülung z.B. mit Kühlluft von aussen erfolgen. Eine weitere Möglichkeit besteht darin, ein Harz mit einem HF- oder UHF-sensitiven Füllstoff zu verwenden und die Beschichtung unter gleichzeitiger Beaufschlagung mit z.B. Kühlluft einem HF- bzw. UHF-Feld auszusetzen, wie dies in der DE—PS 29 06 842 beschrieben ist.

Selbstverständlich sind auch noch andere Herstellungsmethoden einsetzbar.

## Patentansprüche

1. Aus mit unter Wärme vernetzendem Kunststoff beschichteten Fasern bestehendes Vormaterial zur Herstellung von Faserbundstoffen, insbesondere in Form eines beschichteten Faserstrangs, Faserbündels oder Fasergeleges, dadurch gekennzeichnet, dass die die Fasern umschliessende Beschichtung im inneren Teil der Beschichtung zumindest teilweise vernetzt ist und eine im wesentlichen unvernetzte Aussenschicht aufweist.

2. Verfahren zur Herstellung eines aus mit unter Wärme vernetzendem Kunststoff beschichteten Fasern bestehenden Vormaterials, insbesondere in Form eines beschichteten Faserstrangs, Faserbündels oder Fasergeleges, dadurch gekennzeichnet, dass die die Fasern umschliessende Beschichtung in ihrem inneren Teil der Beschichtung wenigstens teilweise vernetzt und mit einer im wesentlichen unvernetzten Aussenschicht ausgebildet wird.

3. Verfahren nach Anspruch 2, dadurch gekennzeichnet, dass die Fasern mit einem einen HF- oder UHF-sensitiven Füllstoff enthaltenden vernetzbaren Kunststoff beschichtet werden, dass die Beschichtung einen HF- bzw. UHF-Feld ausgesetzt wird und dass die Vernetzung der Aussenschicht z.B. durch Beaufschlagung mit Kühlluft unterbunden wird.

4. Verfahren nach Anspruch 2, dadurch gekennzeichnet, dass die Fasern mit elektrischem Strom beaufschlagt und dadurch erwärmt werden, und dass die Vernetzung der Aussenschicht z.B. durch Beaufschlagung mit Kühlluft unterbunden wird.

5. Verfahren nach Anspruch 2, dadurch gekennzeichnet, dass die Fasern zunächst mit einer ersten Kunststoffschicht versehen werden und diese zumindest teilweise vernetzt wird, und dass dann die so beschichteten Fasern mit einer Aussenschicht aus unvernetztem Kunststoff überzogen werden.

## Revendications

1. Matériau primaire pour la fabrication de composites fibreux, constitué de fibres revêtues de matière plastique apte à la réticulation à la chaleur, en particulier sous forme d'un fil de fibres, faisceau de fibres ou mat de fibres, revêtues, caractérisé en ce que le revêtement entourant les fibres est au moins en partie réticulé dans la partie interne du revêtement et présente une couche externe pratiquement non réticulée.

2. Procédé pour la préparation d'un matériau primaire constitué de fibres revêtues de matière plastique apte à la réticulation à la chaleur, en particulier sous forme d'un fil de fibres, faisceau de fibres ou mat de fibres, revêtues, caractérisé en ce que le revêtement entourant les fibres est au moins en partie réticulé dans la partie interne du revêtement et comprend une couche externe pratiquement non réticulée.

3. Procédé selon la revendication 2, caractérisé en ce que les fibres sont revêtues d'une matière plastique réticulable contenant une charge sensible aux hautes fréquences (HF) ou ultra-hautes fréquences (UHF), en ce que le revêtement est soumis à l'action d'un champ à HF ou UHF, et en ce que la réticulation de la couche externe est interrompue, par exemple, par application d'air froid.

4. Procédé selon la revendication 2, caractérisé en ce que les fibres sont soumises à l'action d'un courant électrique et ainsi chauffées, et en ce que la réticulation de la couche externe est interrompue, par exemple, par application d'air froid.

5. Procédé selon la revendication 2, caractérisé en ce que les fibres sont d'abord munies d'une première couche de matière plastique et celle-ci est au moins en partie réticulée, et en ce que les fibres ainsi enduites sont ensuite revêtues avec une couche externe de matière plastique non réticulée.

**Claims**

1. A prepreg consisting of fibres coated with synthetic substance crosslinkable by heating for the production of fibre composites, especialy in the form of a coated fibre roving, fibre bundle or fibre bunch, characterised in that the coating surrounding the fibres is at least partially crosslinked in the inner part of the coating and has a substantially uncrosslinked outer layer.

2. A process for the production of a prepreg consisting of fibres coated with synthetic substance crosslinkable by heating, especially in the form of a coated fibre roving, fibre bundle or fibre bunch, characterised in that the coating surrounding the fibres is at least partially crosslinked in its inner part of the coating and is constructed to have a substantially uncrosslinked outer layer.

3. A process according to claim 2, characterised in that the fibres are coated with a crosslinkable synthetic substance containing a high frequency- or ultra-high frequency-sensitive filler, the coating is exposed to a high frequency or ultra-high frequency field and crosslinking of the outer layer is prevented, for example by applying cooling air.

4. A process according to claim 2, characterised in that an electric current is applied to the fibres thereby heating them, and crosslinking of the outer layer is prevented, for example by applying cooling air.

5. A process according to claim 2, characterised in that the fibres are first provided with a first synthetic substance layer and the latter is at least partially crosslinked, and then the fibres so coated are covered with an outer layer of uncrosslinked synthetic substance.